# DEMANDE DE BREVET EUROPEEN

(11) **EP 0 720 268 A1**
(43) Date de publication de la demande: **03.07.1996**
(21) Numéro de dépôt: 94440081.1
(22) Date de dépôt: 29.12.1994
(51) Int. Cl.: H02H 7/085

(54) **Dispositif de commande d'arrêt du fonctionnement d'un moteur asynchrone monophasé à condensateur**

(71) Demandeur: PLUMER (Société Anonyme), F-68300 Saint-Louis (FR)
(72) Inventeur: Plumer, Louis, F-90000 Belfort (FR)
(74) Mandataire: Rhein, Alain

(57) **Abrégé**

L'invention a trait à un dispositif de commande d'arrêt du fonctionnement d'un moteur asynchrone monophasé à condensateur en cas de détection d'une surcharge de ce moteur par rapport à une valeur seuil.

Ce dispositif est caractérisé en ce qu'il comporte, d'une part, des moyens de mesure (8) du déphasage donc du temps de retard entre la tension d'alimentation de ce moteur (2) et le courant traversant le bobinage principal B1 et, d'autre part, des moyens de commande d'arrêt (14) à même de couper l'alimentation du moteur (2) en cas de mesure d'un temps de retard inférieur à une valeur seuil en mémoire (13).

## Description

Dispositif de commande d'arrêt du fonctionnement d'un moteur asynchrone monophasé à condensateur en cas de surcharge de ce moteur par rapport à une valeur seuil.

En fait, il existe déjà, à l'heure actuelle, des dispositifs à même de détecter qu'un moteur asynchrone monophasé à condensateur fonctionne en surcharge et, par conséquent, de commander l'arrêt de ce moteur. Un tel dispositif est notamment décrit dans le document FR-A-2.649.260. Plus précisément, ce dispositif comporte, d'une part, un circuit à même de délivrer une tension continue homothétique de la tension aux bornes du condensateur de déphasage du moteur et, d'autre part, un circuit délivrant une tension constante de référence. Cet ensemble est complété par un circuit comparateur qui vient comparer les deux tensions issues des circuits précédents pour délivrer, en fin de compte, un signal d'arrêt lorsque la tension continue homothétique devient égale ou inférieure à la tension de référence.

Il est par ailleurs prévu que le circuit à même de délivrer la tension de référence soit asservi au réseau, de manière à délivrer une tension à tout moment proportionnelle à la tension du réseau, quelles que soient les variations que subit cette dernière.

En fait, un tel dispositif présente un certain nombre d'inconvénients liés à son manque de fiabilité, son temps de réponse long et aux réglages qu'il nécessite par rapport aux caractéristiques spécifiques de chaque moteur.

Tout particulièrement, l'ensemble est dépendant de la température du moteur, dans la mesure où celle-ci influence la tension aux bornes du condensateur de déphasage. De plus, ce dispositif étant basé sur le principe d'une comparaison de tensions continues, l'on ne peut en déduire un quelconque résultat qu'après écoulement d'un certain temps correspondant à plusieurs alternances de la tension aux bornes dudit condensateur de déphasage. Or, ce retard au niveau du temps de réponse du dispositif peut engendrer de graves incidents. Tout particulièrement dans le cadre de l'application d'un tel moteur asynchrone monophasé pour la commande d'enroulement et de déroulement d'un tablier d'un volet roulant.

Ainsi, bien qu'il soit précisé, dans ce document FR-A-2.649.260, que ce dispositif de commande d'arrêt peut également intervenir pour arrêter le moteur en fin de course d'enroulement et de déroulement du tablier, il faut observer que cela n'est possible que si l'on est prêt à certaines concessions. Notamment, lors de la montée du tablier de volet roulant et en arrivant en fin de course haute, il est fort probable que le retard à la commande d'arrêt du moteur entraîne la mise sous tension du tablier sollicitant, fortement, les liaisons articulées reliant deux lames successives de ce tablier. Comme il est fréquent d'utiliser un même moteur pour différentes tailles de volet roulant, cette mise sous contrainte, résultant du retard à l'arrêt d'un moteur éventuellement surpuissant, peut entraîner la rupture du tablier.

Dans le cas inverse, lors de la descente du tablier du volet roulant, ce retard de la commande d'arrêt du moteur en fin de course basse engendre une mise sous contrainte du dispositif d'anti-soulèvement du tablier du volet roulant dont est généralement équipé ce dernier. Ainsi, là encore, cette mise sous contrainte d'un tel dispositif d'anti-soulèvement, constitué par des moyens d'articulation spécifiques reliant l'arbre d'enroulement à la première lame du tablier, peut être supérieur à la résistance mécanique de l'ensemble.

La solution pourrait, éventuellement, consister à ajuster en conséquence, le seuil défini par la tension constante de référence de manière à rendre le dispositif plus sensible. Toutefois, en raison d'une variation de tension aux bornes du condensateur de déphasage, malgré tout modéré, par rapport au couple du moteur, l'on ne peut rendre le dispositif de commande d'arrêt trop sensible, sans quoi la moindre résistance due aux frottements ou autres rencontrée par le tablier lors de sa montée ou de sa descente, entraînerait l'arrêt du moteur de manière intempestive.

Finalement, ce dispositif de commande d'arrêt connu est forcément fonction des caractéristiques du moteur et tout particulièrement de la capacité du condensateur de déphasage, mais aussi de la tension du réseau de sorte qu'il convient, systématiquement, de procéder à des réglages. Ceci est, bien sûr, contraignant lors de la conception du dispositif, mais, surtout, il peut y avoir, de ce fait, déréglage dans le temps. Par conséquent, un tel dispositif de commande d'arrêt s'avère, en outre, peu fiable.

Il est également connu, au travers du document US-A-5.151.638, un autre dispositif à même de détecter qu'un moteur fonctionne dans des conditions de surcharge. Dans ce but, ce dispositif examine l'évolution de l'angle de déphasage entre la tension et le courant aux bornes du moteur. En fait, il est précisé, dans le cadre de ce document, que l'angle de déphasage tend vers zéro lorsque la charge du moteur augmente. Ainsi, selon ce dispositif connu, il est prévu de détecter le passage a zéro de cette tension et du courant, des moyens appropriés étant, alors, à même d'émettre un signal représentatif du temps de retard de l'un par rapport à l'autre. Tout particulièrement, il est utilisé un tore ferromagnétique pour détecter le passage à zéro du courant.

En fait, il convient d'observer que la mesure du déphasage est réalisée sur la tension du secteur alimentant le moteur et le courant total traversant ce dernier. Or, s'il existe bel et bien une relation entre le déphasage de cette tension et ce courant total, d'une part, et la charge du moteur, d'autre part, il ne s'agit pas, d'une façon systématique, d'une relation de proportionnalité. De plus, elle est strictement dépendante des caractéristiques du moteur. Ceci signifie que ces dispositifs doivent être réglés en fonction du moteur commandé, qui plus est, au travers d'opérations de tests et autres, ce qui, finalement, ne fait qu'augmenter leur coût de revient. En outre, dès l'instant qu'il y a nécessité de réglage, il y a possibilité de déréglage de sorte que le dispositif s'avère peu fiable.

La présente invention se veut à même de répondre à l'ensemble des inconvénients précités, ceci au travers d'un dispositif de commande d'arrêt du fonctionnement d'un moteur asynchrone monophasé, d'une très grande précision, apte à détecter de manière quasi instantanée, une surcharge du moteur en vue d'en couper l'alimentation. Cette précision provient également du fait que le seuil de détection de surcharge est quasiment indépendant des paramètres du moteur tel que la capacité du condensateur de déphasage ou encore la température de fonctionnement de ce moteur.

A cet effet, l'invention concerne un dispositif de commande d'arrêt du fonctionnement d'un moteur asynchrone monophasé à condensateur en cas de détection d'une surcharge de ce moteur par rapport à une valeur seuil, caractérisé par le fait qu'il comporte, d'une part, des moyens de mesure du déphasage donc du temps de retard entre la tension d'alimentation de ce moteur et le courant traversant le bobinage principal et, d'autre part, des moyens de commande d'arrêt à même de couper l'alimentation du moteur en cas de mesure d'un temps de retard inférieur à une valeur seuil en mémoire.

Finalement, l'objet de l'invention consiste à mesurer le temps de retard, non pas entre la tension aux bornes du moteur et le courant total traversant ce dernier, mais entre la tension du moteur et le courant dans le bobinage principal. Cette manière d'opérer, si elle est originale dans la mesure où l'on vient, pour la première fois, mesurer un paramètre à l'intérieur même du moteur et non, simplement, sur les câbles d'alimentation de ce dernier, a pour avantage de conduire à une relation de proportionnalité entre la mesure du déphasage effectué et la charge appliquée au moteur. Or, de là il en découle que le dispositif devient quasi indépendant des paramètres du moteur, tout particulièrement de la capacité du condensateur de déphasage ou encore de la température de fonctionnement de ce moteur. En outre, il est insensible aux variations de la tension secteur dans une plage normale.

De plus, le dispositif de commande a un temps de réponse quasi instantané, puisqu'il est en mesure de détecter une surcharge du moteur à la suite des mesures effectuées sur une demi alternance.

D'autres buts et avantages de la présente invention apparaîtront au cours de la description qui va suivre se rapportant à un exemple de réalisation illustré dans les dessins joints en annexe.
- la figure 1 représente un schéma synoptique de l'ensemble électronique composant le dispositif selon l'invention.
- la figure 2 est une représentation graphique du signal correspondant à la tension du secteur :
- la figure 3 est la transformation du signal de la tension en un signal sensiblement carré apte à être interprété sous forme d'une commande logique :
- la figure 4 est une représentation graphique du signal correspondant au courant traversant le bobinage principal :
- la figure 5 est la transformation du signal du courant en un signal sensiblement carré apte à être interprété sous forme d'une commande logique.

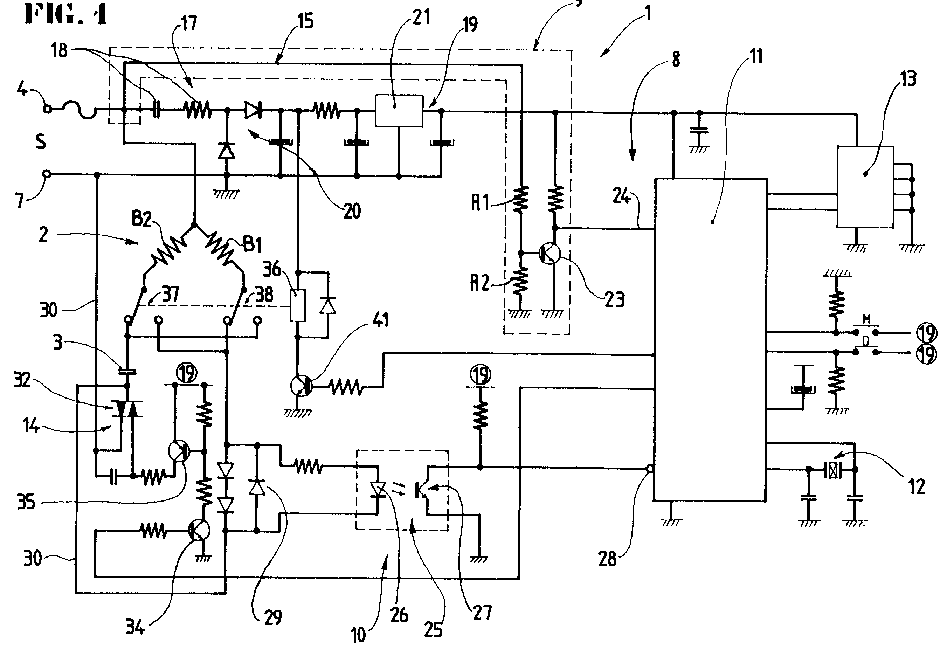

Tel que représenté dans la figure 1, la présente invention est relative à un dispositif 1 de commande d'arrêt de fonctionnement d'un moteur asynchrone monophasé 2 à condensateur 3.

Ainsi, ce moteur 2 se distingue par un bobinage principal B1 et un bobinage auxiliaire B2, d'une part, raccordés au commun 4 du secteur S et, d'autre part, reliés entre eux par le condensateur de déphasage 3 à même de créer le champ tournant pour la commande en rotation du rotor. A noter, à ce propos, que le bobinage principal B1 est encore raccordé à la borne 7 du secteur S.

Quant au dispositif de commande d'arrêt 1, tel que déjà précisé plus haut, il a pour but de détecter une éventuelle surcharge du moteur 2 par rapport à une valeur seuil en vue de commander, de manière quasi instantanée, l'arrêt du fonctionnement de ce moteur 2. Dans ce but et selon l'invention, le dispositif de commande d'arrêt 1 comporte des moyens 8 pour mesurer le déphasage, donc le temps de retard entre la tension d'alimentation du moteur 2, donc du secteur S, et le courant traversant le bobinage principal B1. L'on comprendra, bien évidemment, que, selon le sens de rotation communiqué au moteur 2, le rôle des bobinages B1, B2 est inversé. Cela n'empêche que la mesure du déphasage de la tension sera toujours effectuée par rapport au courant traversant le bobinage intervenant à titre principal.

Conformément à l'invention, les moyens de mesure 8 du temps de retard entre la tension secteur et le courant traversant le bobinage principal B1 comportent des moyens de détection 9 du passage à zéro de la tension secteur, ainsi que des moyens de détection 10 du passage à zéro du courant traversant le bobinage principal B1. Finalement, le dispositif 1 comporte un microprocesseur 11 relié à une horloge 12 et qui est à même de mesurer le temps de retard en vue de le comparer à une valeur seuil connue d'une mémoire 13, pour commander, le cas échéant, l'arrêt du moteur 2 à l'aide de moyens de commande 14 appropriés.

Il convient d'observer que, le dispositif 1 comporte, en outre, une alimentation basse tension à courant continu 19 intervenant, notamment, dans la commande du microprocesseur 11. Tout particulièrement, l'on retrouve au niveau des circuits de cette alimentation à courant continu basse tension 19, des moyens 17 pour abaisser la tension et la puissance, ces moyens 17 étant définis, plus particulièrement, par une résistance et un condensateur 18. Puis, à cet ensemble, est associé un circuit 20 de redressage du courant de conception classique et précédant un régulateur de tension 21. Par conséquent, en sortie de ce dernier l'on dispose d'une alimentation à courant continu basse tension à même d'intervenir dans le cadre des commandes logiques reçues ou émises par le microprocesseur 11.

Quant aux moyens de détection 9, ils consistent en un circuit 15 à même de transformer le signal sinusoïdal de la tension secteur, tel que représenté schématiquement dans la figure 2 en un signal sensiblement carré où chaque saut de tension correspond au passage, approximativement à zéro, de la tension secteur. Ce signal sensiblement carré est adapté pour constituer une commande logique 0 ou 1 susceptible d'être interprétée par le microprocesseur 11.

Dans ce but, la borne 4 du secteur S alimente un pont diviseur R1/R2, la base d'un transistor NPN 23 lequel conduit lorsque la tension secteur est positive et, au contraire, se bloque lorsque cette tension secteur est négative. Par conséquent, dès l'instant que cette tension secteur devient positive, ce transistor NPN 23 vient relier la broche 24 du microprocesseur 11 à la masse correspondant à une commande logique à l'état zéro. Contrairement, en cas de tension négative, le transistor NPN 23 est bloqué de sorte que la broche 24 du microprocesseur 11 est reliée à l'alimentation basse tension 19 correspondant à une commande logique d'état 1.

Les moyens de détection 10 du passage à zéro du courant traversant le bobinage principal B1 comportent, quant à eux, un optocoupleur 25 comprenant une diode led 26 qui, lorsqu'elle conduit et, donc, lorsqu'elle est traversée par un courant, entraîne la polarisation de la base d'un phototransistor NPN 27 afin de le rendre conducteur. A ce moment là, une broche 28 du microprocesseur 11, étant reliée à la masse, détecte un état de commande logique 0. Dans le cas contraire, c'est-à-dire lorsque la diode led 26 est bloquée, donc lorsque le courant est en sens inverse, le phototransistor NPN 27 est bloqué à son tour de sorte que la broche 28 est alors reliée à l'alimentation basse tension 19 entraînant une commande logique à l'état 1. L'on comprendra, aisément, qu'au lieu d'utiliser un phototransistor 27 NPN l'on peut faire appel à un phototransistor PNP en inversant, par exemple, le montage de la diode led 26 dans le circuit.

Cet optocoupleur 25 est monté en parallèle, à un shunt de courant à diode 29 sur le raccordement électrique 30 reliant le bobinage principal B1 à la borne 7 du secteur S.

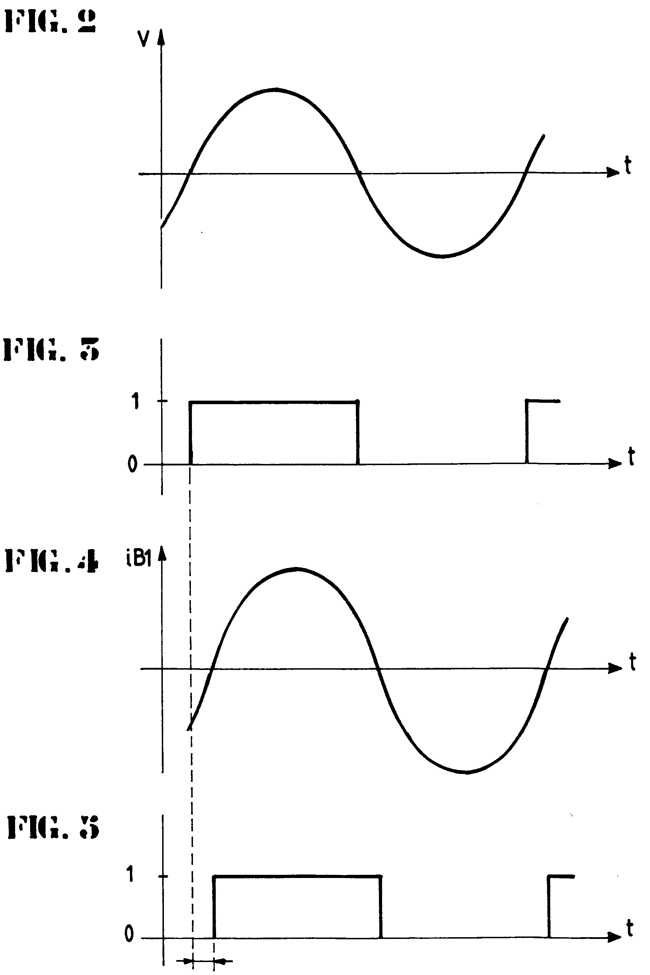

Ainsi, au travers de cet optocoupleur 25 il est transmis au microprocesseur 11 un signal sensiblement carré (voir figures 4 et 5) dont chaque transition, assimilable au passage d'une commande logique de l'état 0 à l'état 1 ou inversement, correspond au passage sensiblement à zéro du courant traversant le bobinage principal B1.

Par conséquent et grâce à l'horloge 12, le microprocesseur 11 peut, à chaque demi-alternance, mesurer le temps de retard entre la tension du secteur S et ce courant traversant le bobinage principal B1 et le comparer à un temps correspondant à une valeur seuil introduite au niveau de la mémoire 13. A ce propos, il faut observer que pendant les phases transitoires correspondant au démarrage du moteur 2 il se produit des fluctuations au niveau de ce déphasage entre la tension secteur et le courant traversant le bobinage principal B1. Aussi, de manière à éviter que le dispositif ne provoque des arrêts intempestifs du moteur 2, il est prévu que les moyens 8 de mesure du temps de retard n'interviennent pas pendant ces périodes transitoires de démarrage. Plus exactement, les mesures ne sont effectuées ou encore ne sont interprétées par le microprocesseur 11 qu'après écoulement d'un temps donné assimilable à cette phase de démarrage du moteur 2, temps correspondant préférentiellement à un nombre d'alternances de la tension secteur compris entre 50 et 100 environ.

Une fois cette période transitoire écoulée, les moyens de mesure 8 jouent pleinement leur rôle de sorte que, en cas de mesure d'un temps de retard, inférieur à la valeur seuil, le dispositif 1 commande l'arrêt de fonctionnement du moteur 2 par l'intermédiaire des moyens 14 comportant principalement un triac 32. Préférentiellement, ce triac 32, monté sur le raccordement électrique 30 reliant le bobinage principal B1 à la borne 7 du secteur S, est alimenté lorsque la commande logique issue du microprocesseur 11 est à l'état zéro. Ce montage est préféré dans la mesure où il conduit à une consommation d'énergie électrique moindre. Aussi, un montage inverse serait envisageable.

Pour en revenir à la situation correspondant à la figure 1 du dessin ci-joint, lorsque le microprocesseur 11 détecte un temps de retard inférieur à la valeur seuil en mémoire 13, il émet, au travers de sa broche 33 un ordre logique à l'état 1. Plus précisément, il vient alimenter la base d'un transistor NPN 34 reliant à la masse la base d'un transistor PNP 35. Celui-ci est alors bloqué n'alimentant plus le triac 32 lequel coupe la liaison électrique 30 raccordant le bobinage principal B1 au secteur S.

Tel que précisé plus haut, selon le sens de rotation communiqué au moteur 2, l'un ou l'autre des bobinages B1, B2 devient principal. Aussi, pour que le dispositif de commande d'arrêt 1 puisse intervenir, quel que soit le sens de rotation communiqué au moteur 2, il lui faut disposer de deux optocoupleurs 25 montés en série sur chacun des raccordements électriques reliant les bobinages B1, B2 au secteur S au travers d'un relais RT de commande de changement de sens. Toutefois, selon un mode de réalisation préférentiel, le dispositif de commande d'arrêt 1 comporte un relais RT 36 à même de commander deux contacts 37, 38 venant raccorder, selon le cas, le bobinage B1 ou le bobinage B2 au secteur S par l'intermédiaire du raccordement électrique 30 comportant l'optocoupleur 25. Simultanément, l'autre bobinage, respectivement B2, B1 est commuté, au travers de ces contacts 37, 38 en tant que bobinage auxiliaire.

La commande du relais RT 36 est assurée par l'intermédiaire d'un ordre logique transmis par le microprocesseur 11 réceptionnant, lui-même, une commande logique transmise par l'intermédiaire de boutons poussoirs M et D monostables normalement ouverts 39, 40.

Ainsi, au cas où, lors de la commande précédente, le microprocesseur 11 a reçu un ordre logique à l'état 1 en provenance du bouton poussoir M 39 et qu'il perçoit, à présent, un ordre logique à l'état 1 provenant du bouton poussoir D 40, il transmet un ordre logique à l'état 1 en direction d'un transistor NPN 41 dont la base est alors polarisée. Ce transistor NPN 41 étant, dans ces conditions, conducteur, il vient raccorder le relais RT 36 à la masse, lequel relais étant, par ailleurs, raccordé au commun 4 du secteur de sorte qu'il est alimenté provoquant le basculement des contacts 37, 38 et le changement de sens de la rotation du moteur 2.

En définitive et tel que précisé plus haut dans la description, selon l'invention en tenant compte de la relation de proportionnalité qui lie, d'une part, le temps de retard entre la tension du secteur et le courant traversant le bobinage principal et, d'autre part, la charge du moteur, relation qui, plus est, est indépendante des caractéristiques du moteur et, notamment, de sa température ou encore de la capacité du condensateur de déphasage, il a été possible d'obtenir un dispositif de commande d'arrêt conduisant à un temps de réponse quasi instantané et à une précision non encore égalée. En fait, c'est précisément grâce à ces caractéristiques toutes particulières que ce dispositif de commande d'arrêt 1 est en mesure d'intervenir en tant que commande de fin de course haute et basse, par exemple, d'un volet roulant motorisé. Ceci n'a pu être envisagé, jusqu'alors, que sous certaines contraintes et, surtout, en acceptant un risque évident de rupture du tablier du volet roulant dû, précisément, au retard de la commande d'arrêt procuré par les dispositifs antérieurement connus.

## Revendications

1. Dispositif de commande d'arrêt du fonctionnement d'un moteur (2) asynchrone monophasé à condensateur (3) en cas de détection d'une surcharge de ce moteur (2) par rapport à une valeur seuil, caractérisé par le fait qu'il comporte, d'une part, des moyens de mesure (8) du déphasage donc du temps de retard entre la tension d'alimentation de ce moteur (2) et le courant traversant le bobinage principal B1 et, d'autre part, des moyens de commande d'arrêt (14) à même de couper l'alimentation du moteur (2) en cas de mesure d'un temps de retard inférieur à une valeur seuil en mémoire (13).

2. Dispositif de commande d'arrêt selon la revendication 1, caractérisé par le fait que les moyens de mesure (8) comportent des moyens de détection (9) du passage, sensiblement à zéro, de la tension d'alimentation du moteur (2), ainsi que des moyens de détection (10) du passage, sensiblement à zéro, du courant traversant le bobinage principal B1.

3. Dispositif de commande d'arrêt selon l'une quelconque des revendications 1 et 2, caractérisé par le fait qu'il comporte un microprocesseur (11), auquel est associé une horloge (12), et qui est à même de mesurer le temps de retard en vue de le comparer à une valeur seuil connue au niveau d'une mémoire (13) pour commander, le cas échéant, l'arrêt du moteur (2) par l'intermédiaire desdits moyens de commande d'arrêt (14).

4. Dispositif de commande d'arrêt selon les revendications 2 et 3, caractérisé par le fait que les moyens de détection (9) consistent en un circuit (15) à même de transformer le signal sinusoïdal de la tension d'alimentation du moteur (2) en un signal sensiblement carré où chaque saut de tension correspond au passage, approximativement à zéro, de la tension secteur, ce signal sensiblement carré constituant une commande logique du type 0 ou 1 susceptible d'être interprétée par le microprocesseur (11).

5. Dispositif de commande d'arrêt selon les revendications 2 et 3, caractérisé par le fait que les moyens de détection (10) du passage a zéro du courant traversant le bobinage principal B1 comportent au moins un optocoupleur (25) à même de transmettre au microprocesseur (11) un signal sensiblement carré dont chaque transition, assimilable au passage d'une commande logique de l'état 0 à l'état 1 ou inversement, correspond au passage sensiblement à zéro du courant traversant le bobinage principal B1.

6. Dispositif de commande d'arrêt selon la revendication 5, caractérisé par le fait que l'optocoupleur (25) est monté par l'intermédiaire d'un shunt de courant à diodes (29) sur un raccordement électrique (30) reliant le bobinage principal B1 au secteur S.

7. Dispositif de commande d'arrêt selon les revendications 5 et 6, caractérisé par le fait qu'il comporte un relais RT (36) à même de commander deux contacts (37, 38) venant raccorder, selon le cas, le bobinage B1 ou le bobinage B2 au secteur S par l'intermédiaire du raccordement électrique (30) comportant l'optocoupleur (25), simultanément, l'autre bobinage respectivement B2, B1 étant commuté au travers de ces contacts (37, 38) en tant que bobinage auxiliaire.

8. Dispositif de commande d'arrêt selon la revendication 7, caractérisé par le fait que la commande du relais RT (36) est assurée par l'intermédiaire d'un ordre logique transmis par le microprocesseur (11) sous l'impulsion d'une commande logique issue de boutons poussoirs M et D monostables normalement ouverts (39, 40).

9. Dispositif de commande d'arrêt selon les revendications 1 et 6, caractérisé par le fait que les moyens de commande d'arrêt (14) comportent un triac (32) monté sur le raccordement électrique (30) reliant le bobinage principal B1 au secteur S, l'alimentation de ce triac (32) étant interrompue sous l'impulsion d'une commande logique issue du microprocesseur (11) en cas de mesure d'un temps de déphasage inférieur à une valeur seuil.

10. Application du dispositif de commande d'arrêt selon l'une quelconque des revendications 1 à 9, pour la commande de fin de course haute et basse du tablier d'un volet roulant comportant un moteur asynchrone monophasé à condensateur.
